Europäisches Patentamt

European Patent Office

Office européen des brevets

(19)

(11) Veröffentlichungsnummer: **0 122 575**
**B1**

(12) EUROPÄISCHE PATENTSCHRIFT

(45) Veröffentlichungstag der Patentschrift: **14.03.90**

(51) Int. Cl.⁵: **B 60 G 17/08, F 16 F 9/46**

(21) Anmeldenummer: **84103933.2**

(22) Anmeldetag: **09.04.84**

(54) Selbstregelnder Einrohr- oder Zweirohr Stossdämpfer, insbesondere für Kraftfahrzeuge.

(30) Priorität: **22.12.83 DE 3346352**
**11.04.83 DE 3312899**
**11.04.83 DE 3312881**

(43) Veröffentlichungstag der Anmeldung:
**24.10.84 Patentblatt 84/43**

(45) Bekanntmachung des Hinweises auf die
Patenterteilung:
**14.03.90 Patentblatt 90/11**

(84) Benannte Vertragsstaaten:
**AT BE CH DE FR GB IT LI LU NL SE**

(56) Entgegenhaltungen:
**DE-A-2 911 768**
**DE-A-3 215 614**
**FR-A- 600 899**
**US-A-2 950 785**
**US-A-3 146 862**

(73) Patentinhaber: **F & O Electronic Systems GmbH**
**Kirchenstrasse 38**
**D-6901 Neckarsteinach (DE)**

(72) Erfinder: **Obstfelder, Günther**
**Panoramastrasse 28**
**D-6940 Weinheim-Lützelsachsen (DE)**
Erfinder: **Kreutze, Gerhard**
**Kirchenstrasse 38**
**D-6901 Neckarsteinach (DE)**
Erfinder: **Lüttig, Winfried**
**Lange Acker 16**
**D-6901 Heiligkreuzsteinach (DE)**

(74) Vertreter: **Mierswa, Klaus, Dipl.-Ing.**
**Friedrichstrasse 171**
**D-6800 Mannheim 24 (DE)**

Courier Press, Leamington Spa, England.

## Beschreibung

Die Erfindung betrifft einen selbstregelnden Einrohr oder Zweirohr-Stoßdämpfer, insbesondere für Kraftfahrzeuge, gemäß dem Oberbegriff des Patentanspruchs 1.

Durch die DE-A-29 11 768 ist ein regelbarer Stoßdämpfer, insbesondere für Kraftfahrzeuge, bekannt geworden, der aus einem mit einer Dämpfungsflüssigkeit gefüllten Zylinder und mit einem den Zylinder übergreifenden zylindrischen Topf besteht, der innen zentrisch und axial eine Kolbenstange aufweist, die in den Zylinder eintaucht und die an ihrem Ende eine gegen die Zylinderwand abgedichtete Scheibe trägt, die den Zylinderraum in zwei Kammerhälften aufteilt und die richtungsabhängige Hoch- und Niederdruckventile aufweist mit einem in einer axialen Bohrung der Kolbenstange beweglich angeordneten, in axialer Richtung federbelasteten Steuerschieber, der in Ruhestellung/Arbeitsstellung eine zusätzliche Durchgangsöffnung zwischen den beiden Kammerhälften schließt. Der Steuerschieber ist in axialer Richtung an einem Anker angeordnet, der in eine elektrische Spule eintaucht, die innerhalb der Längsbohrung im oberen Teil der Kolbenstange angeordnet ist und die eine elektrische Zuführleitung von außerhalb des Stoßdämpfers aufweist. Desweiteren weist der Zylinder an seinem oberen Ende mindestens einen Dauermagneten auf, wobei an der zylindrischen Innenwandung des Topfes in axialer Richtung mindestens eine Spule angeordnet ist, die ebenfalls eine Zuführleitung von außerhalb des Stoßdämpfers aufweist.

Es hat sich gezeigt, daß es mit einer derartigen Anordnung praktisch nicht möglich ist, die Durchgangsöffnung durch den Steuerschieber beliebig teilweise zu schließen, weil der Anker mitsamt dem Steuerschieber frei beweglich in der Spule angeordnet ist. Deshalb können einwandfrei nur die Endstellungen des Steuerschiebers geschaltet werden. Ebenfalls problematisch ist die als Rohr ausgeführte Kolbenstange, weil die Kolbenstange eines Stoßdämpfers besonderen statischen Bedingungen genügen muß.

Der Erfindung liegt deshalb die Aufgabe zugrunde, einen selbstregelnden Stoßdämpfer der eingangs genannten Gattung zu schaffen, der praktisch verzögerungsfrei sich selbsttätig allen momentanen Straßenverhältnissen anpaßt, wobei der Stoßdämpfer seine Dämpfungscharakteristik entsprechend den gegebenen Straßenverhältnissen selbsttätig verändern soll, wobei der Durchfluß des Dämpfungsmediums zwischen Kolbenstange und Schieber praktisch drucklos erfolgen soll.

Die Lösung dieser Aufgabe besteht erfindungsgemäß in den kennzeichnenden Merkmalen des Patentanspruchs 1. Weitere Ausgestaltungen der Erfindung sind in den Unteransprüchen gekennzeichnet.

Der erfindungsgemäße Stoßdämpfer besitzt den hervorstechenden Vorteil, daß dieser sich selbsttätig regelnd sich praktisch ohne Zeitverzögerung jeder gegebenen Straßenlage anpaßt. Beispielsweise muß der Stoßdämpfer beim Bremsen und Beschleunigen hart werden, wobei sich der erfindungsgemäße Stoßdämpfer augenblicklich auf diese Bedingungen einstellt.

Aufgrund der regelbaren Dämpfung kann der erfindungsgemäße Stoßdämpfer ein ganzes Kennlinienfeld durchfahren, was mit bekannten Stoßdämpfern des Standes der Technik nicht möglich ist. In vorteilhafter Weise können des weiteren sämtliche Aggregate innerhalb des Zylinders des Stoßdämpfers integriert sein, auch ein gegebenenfalls vorhandener Beschleunigungsgeber und eine Einrichtung zur Messung des Weges des Rades gegenüber der Karrosserie. Darüber hinaus können dem Regel- und Steuerschaltkreis eine Reihe von Grenzwerten eingespeichert werden, die den Stoßdämpfer bei Vorliegen dieser Grenzwerte in der gewünschten Weise beeinflußt.

In vorteilhafter Weise ist es mit dem erfindungsgemäßen Stoßdämpfer möglich, die Schließstellung von der Offenstellung in beliebig viele und kleine Schritte zu unterteilen, durch die eine sehr genaue Regelung bzw. Steuerung des Schiebers möglich ist. Von entscheidendem Vorteil ist, daß es hier auf die Ausbildung der Strömungsverhältnisse nach dem Austritt des Dämpfungsmediums aus den Durchbrüchen der Kolbenstange nicht ankommt, weil zwischen der Kolbenstange und dem Schieber keinerlei Kraftübertragung durch das Dämpfungsmedium stattfindet. Die Wirkungsweise des erfindungsgemäßen Stoßdämpfers wird somit vom Durchströmen des Dämpfungsmediums durch die mehr oder weniger freigegebenen Durchbrüche innerhalb der Kolbenstange nicht beeinflußt. Das Dämpfungsmedium greift aufgrund der erfindungsgemäßen Bauweise nicht mehr direkt am Schieber an bzw. es findet keine Kraftübertragung vom Dämpfungsmedium auf den Schieber statt.

Prinzipiell sind zwei Grundausführungen des Schiebers möglich, und zwar als Hubschieber oder als Drehschieber. Die Ausführungsform als Hubschieber hat dazu noch den Vorteil, daß der Schieber eine einfache Hülse ist, die, zusammen mit den übrigen Teilen des Schrittmotors, leicht herzustellen ist. Insbesondere die Ausgestaltung des erfindungsgemäßen Stoßdämpfers mit Hubschieber zeichnet sich durch höchst einfache Bauweise aus.

Beim erfindungsgemäßen Stoßdämpfer besitzt der Schieber für beide Grundausführungen praktisch keine Massenträgheit, weil der Schieber aufgrund seiner geringen Eigenmasse praktisch trägheitslos auf die Regel- bzw. Steuersignale der Spulenkörper reagieren kann. Darüber hinaus ist eine Verfälschung der Stellung des Schiebers aufgrund von starken Beschleunigungen nicht möglich, da der Schieber mit hohen elektrischen Kräften zwangsweise geführt ist. Darüber hinaus wirken auf den Schieber bei gleichzeitiger Ansteuerung jeweils von zwei paarweise sich gegenüber liegenden elektrischen Magneten keine Radialkräfte.

Bei der Ausführung des erfindungsgemäßen Stoßdämpfers mit Schieber ist dieser vorzugsweise als innenliegender Rotor des Schrittmotors ausgestaltet, wobei jedoch der Drehschieber auch als außenliegender Rotor ausgebildet sein kann.

Die Gewinnung eines wegabhängigen Meßsignals geschieht am einfachsten und wirkungsvollsten mittels eines Gewindes innerhalb der Innenwandung des Zylinders, wobei dem Gewinde ein an der Kolbenstange angeordneter kapazitiver oder magnetischer Sensor gegenübersteht.

Zwei Beispiele der Erfindung sind in der Zeichnung dargestellt und anschließend beschrieben. Dabei zeigen:

Fig. 1 einen Querschnitt durch einen Einrohr-Stoßdämpfer zur Darstellung des Zylinders, der Kolbenstange des Schiebers und des Schrittmotors, wobei der Schieber hier ein Hubschieber ist,

Fig. 2 eine vergrößerte Darstellung der Hülse und der Spulenkörper mitsamt den Erregerspulen, die zusammen den Schrittmotor des Ausführungsbeispiels der Fig. 1 bilden,

Fig. 3 a+b eine Draufsicht auf eine weitere, die Durchbrüche der Kolbenstange abdeckende Hülse, die im Bereich der Durchbrüche der Kolbenstange Querreihen und Längsreihen von Löchern aufweist und einen Querschnitt längs der Linie B-B,

Fig. 4 einen Querschnitt durch einen weiteren Stoßdämpfer mit Drehschieber,

Fig. 5 eine Draufsicht auf den Querschnitt längs der Schnittlinien A-A in Fig. 4, wobei die Erregerspulen der Spulenkörper weggelassen worden sind,

Fig. 6 einen Schnitt durch eine weitere Kolbenstange, die innen im Bereich der Durchbrüche ein Ventil zum Verschließen der Durchbrüche in einer Vorzugsrichtung aufweist,

Fig. 7 einen Längsschnitt durch den oberen Teil eines Stoßdämpfers zur Darstellung eines Weggebers und

Fig. 8 eine Weg-Meßstrecke, bestehend aus einem Trapezgewinde innerhalb des Zylinders und einem Hall-Sensor innerhalb der Kolbenstange.

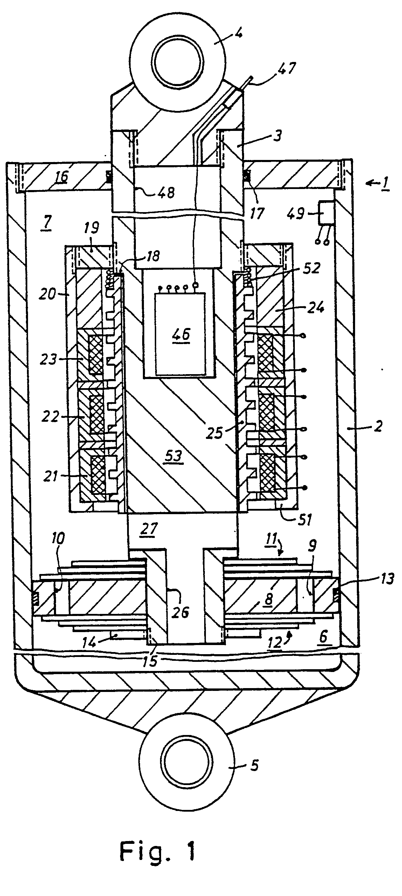

Gemäß der Figur 1 besteht der regelbare Stoßdämpfer 1 aus einem Zylinder 2, der beidendig geschlossen und mit mindestens einem Dämpfungsmedium gefüllt ist, wobei dieses eine Flüssigkeit und/oder ein Gas ein kann. Das obere Ende des Zylinders ist mittels eines Zylinderdeckels 16 verschlossen, der beispielsweise in den Zylinder eingeschraubt ist. Durch den Zylinderdeckel 16 ragt eine Kolbenstange 3 in den Zylinder 2 hinein, wobei der Durchgang mittels einer Ringdichtung 17 zur Kolbenstange abgedichtet ist. Am oberen Ende der Kolbenstange und am unteren Ende des Zylinders sind jeweils eine Halterung 4,5 zur Befestigung des Stoßdämpfers 1 einerseits an der Karrosserie und andererseits am Rad oder an der Achse des Fahrzeugs angeordnet. Die Kolbenstange besitzt vorzugsweise eine Längsbohrung 48, in der ein elektronischer Regel bzw. Steuerschaltkreis 46 angeordnet ist. Die Kolbenstange 3 weist an ihrem zylinderseitigen Ende 15 einen Kolben 8 auf, der in bekannter Weise scheibenförmig ausgebildet ist. Dieser Kolben ist mittels einer Mutter 14, die auf das untere Ende der Kolbenstange 15 aufgeschraubt ist, fest mit der Kolbenstange verbunden.

Der Kolben 8 kann ein gewöhnlicher Kolben sein, wie er im Stoßdämpferbau bekannt ist, weshalb der Kolben 8 Durchgangsbohrungen 9, 10 aufweist, die mittels Federpaketen 11, 12 abgedeckt sind. Die Federn können z.B. unterschiedliche Federnwerte aufweisen, wodurch der Kolben 8 ein Hochdruck und ein Niederdruckventil darstellt. Der Kolben 8 teilt den Zylinderinnenraum in eine untere Kammerhälfte 6 und in eine obere Kammerhälfte 7, die somit in der in Figur 1 gezeigten Ausführung über die Durchgangsbohrungen 9, 10 miteinander in Verbindung stehen.

Das untere Ende 15 der Kolbenstange 3 weist, ausgehend von der Stirnfläche der Kolbenstange, eine Längsbohrung 26 auf, die zentrisch zur Längsachse der Kolbenstange 3 verläuft und sich bis über den Kolben 8 erstreckt. Quer zu dieser Längsbohrung 26 besitzt die Kolbenstange 3 oberhalb des Kolbens 8 mindestens einen Durchbruch 27, der radial die Längsbohrung 26 durchsetzt, wobei die Anzahl der Durchbrüche beliebig sein kann. In Figur 1 ist der gezeigte Durchbruch eine Querbohrung 27 längs eines Durchmessers der Kolbenstange 3. Damit verbinden die Bohrungen 26, 27 die Kammerhälften 6, 7 miteinander und schaffen so bei der bevorzugten Verwendung des Kolbens 8 mit Hoch- und Niederdruckventilen zusätzlich einen Bypass, gebildet aus diesen Bohrungen 26, 27.

Auf der Kolbenstange ist ein Schieber 25 angeordnet, der auf der Kolbenstange frei verschieblich nach oben und unten ist. Zur Begrenzung des Weges des Schiebers nach oben in Richtung zum Zylinderdeckel 16 besitzt die Kolbenstange 3 eine umlaufende Schulter 18, so daß der Schieber 25 nur auf dem unteren, verjüngten Teil der Kolbenstange 3 läuft. Oberhalb der Schulter 18 ist auf die Kolbenstange 3 eine Scheibe 19 aufgesetzt, beispielsweise aufgeschraubt. Eine Hülse 20 ist ihrerseits an ihrem oberen Ende mit einem Innengewinde versehen und auf die periphere Stirnwandung der Scheibe 19 aufgeschraubt Diese Hülse 20 erstreckt sich nach unten im Bereich des Schiebers 25 ungefähr bis oberhalb des Durchbruches 27 innerhalb der Kolbenstange 3. Die Hülse 20 besitzt an ihrem unteren, dem Durchbruch 27 zugewandten Ende, einen umgebördelten Rand 51.

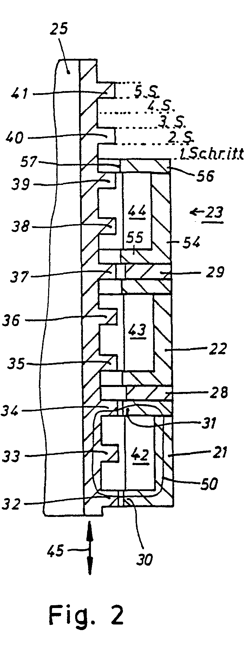

Innerhalb dieser Hülse 20 sind mehrere torusförmige Spulenkörper 21, 22, 23 angeordnet, wobei deren Aufbau, zusammen mit dem Schieber 25, anhand der Figur 2 beschrieben wird.

Gemäß Figur 2 besitzt der Schieber 25 eine Mehrzahl von hervorstehenden Ringen 32, 33, 34, 35, 36, 37, 38, 39, 40, 41, die voneinander gleiche Abstände haben. Der Schieber 25 besteht vorzugsweise aus weichmagnetischem Material, beispielsweise Weicheisen. Der nutenförmige Zwischenraum zwischen je zwei Ringen kann beispielsweise mittels (nicht dargestelltem) Kunststoff aufgefüllt sein, so daß die Stirnflächen sämtlicher Ringe zusammen mit den peripheren umlaufenden Ringflächen der Kunststoffummantelungen, eine geschlossene Manteloberfläche des Schiebers bilden.

Innerhalb der Hülse 20 sind übereinander die Spulenkörper 21, 22, 23 angeordnet, die bevorzugt torusförmig den Schieber 25 umgeben. Jeder einzelne Spulenkörper 21, 22, 23 besitzt zwei torusförmige Polschuhe 30, 31, die zwischen sich einen Aufnahmeraum für je eine Erregerspule 42, 43, 44 aufweisen. Der Spulenkörper besteht dabei vorzugsweise ebenfalls aus magnetisch weichem Material, beispielsweise Weicheisen. Die Spulenkörper sind dergestalt angeordnet, daß die Polschuhe ringförmig den Ringen 32-41 des Schiebers 25 unter Belassung eines geringen Luftspaltes gegenüberstehen. Die Erregerspulen 42, 43, 44 sind einzeln ansteuerbar und über (nichtgezeigte) Leitungen mit dem Regel- bzw. Steuerschaltkreis 46 verbunden.

Bevorzugt besteht ein Spulenkörper aus einem rohrförmigen Zylinder 44, an dem einstückig ein Boden 55 angeformt ist. Der Zylinder 54 wird auf seiner Oberseite durch einen Deckel 56 abgeschlossen. Der Boden 55 und der Deckel 56 besitzen je eine zentrische Bohrung, deren Durchmesser geringer ist, als der lichte Durchmesser des Zylinders 54. In diesem dadurch gebildeten ringförmigen Innenraum ist je die Erregerspule angeordnet. Der Boden 55 und der Deckel 56 bilden mit ihren inneren, stirnseitigen Schmalflächen 57 jeweils die Polschuhe 3o, 31 des Spulenkörpers.

Der Aufbau dieser Anordnung ist dergestalt, daß die Spulenkörper zusammen mit ihren Erregerspulen und dem Schieber einen Schrittmotor, und zwar einen Linearmotor, bilden. Dabei hängt die Größe des einzelnen Schrittes von der Anzahl der Ringe des Schiebers, der Anzahl der Polschuhe und dem Abstand der Polschuhe voneinander ab. Vorzugsweise besteht der Schieber aus magnetisch weichem Werkstoff, wobei der Schieber mitsamt den Ringen ein einstückiges Drehteil bildet. Damit stehen sämtliche Ringe untereinander in magnetischer Verbindung.

In Fig. 2 ist eine solche Gestaltung des Schiebers 25 und der Erregerspulen gewählt, bei der die Polschuhe 30, 31 der einzelnen Spulenkerne (21, 22, 23 oder Spulenkörper den doppelten Abstand aufweisen, wie zwei benachbarte Ringe des Schiebers 25. Zur Auffüllung der Hülse 20 im oberen Bereich oberhalb der obersten Erregerspule 23 dient ein Füllring 24, der vorzugsweise aus Kunststoff besteht. Zur Abstandhalterung der einzelnen Spulenkörper oder Spulenkerne 21, 22, 23 dienen dazwischen angeordnete scheibenförmige Abstandsscheiben 28, 29, die magnetisch isolierend sind und somit zur scharfen Trennung der magnetischen Erregung und somit der mag-netischen Feldlinien innerhalb zweier benachbar-ter Spulenkörper dienen. In dem hier gezeigten Beispiel beträgt die Dicke dieser Abstandsscheiben 28, 29 gleich die Dicke eines Ringes, die bevorzugt wiederum gleich der Dicke der Polschuhe 30, 31 ist.

Die Wirkungsweise des erfindungsgemäßen Stoßdämpfers ist:

Beide Figuren zeigen den Schieber 25 in seiner vollständig geöffneten Stellung, so daß der untere Rand des Schiebers 25 gerade den Durchbruch 27 vollständig freigibt. Dazu wird die Erregerspule 42 erregt, so daß sich magnetische Feldlinien 50, wie in Figur 2 gezeigt, zwischen den Polschuhen 30, 31 und den Ringen 32, 34 ausbilden. In dieser Stellung wird somit der Schieber 25 gehalten, solange die Erregerspule 42 erregt ist. Wird nun die Erregerspule 43 erregt und die Spule 42 abgeschaltet, so bewegt sich der Schieber 25 um einen Schritt - der der Dicke eines Ringes entspricht - nach unten, so daß die Ringe 35, 37 den Polschuhen des Spulenkörpers 22 gegenüberstehen. Dadurch haben sich gleichzeitig die Ringe 38, 40 bis auf einen Schritt den Polschuhen des Spulenkörpers 23 angenähert. Wird nun beim nächsten Schritt die Erregerspule 44 erregt und die Spule 43 ausgeschaltet, so bewegt sich aufgrund der Tatsache der Minimisierung der Energie im magnetischen Feld der Schieber 25 einen weiteren Schritt nach unten, indem die Ringe 38, 40 nunmehr den Polschuhen des Spulenkörpers 23 gegenüberstehen. Zum nächsten Schritt wird nunmehr wieder die Erregerspule 42 des Spulenkörpers 21 erregt und die Spule 44 abgeschaltet. Dadurch wandern die Ringe 33, 35 in den unmittelbaren Bereich der Polschuhe des Spulenkörpers 21. Zur Ausführung des letzten Schrittes wird wiederum die Erregerspule 44 des Spulenkörpers 23 erregt und die vorher erregte Spule abgeschaltet. Dadurch wandern die Ringe 39, 41 in den Bereich der Polschuhe des Spulenkörpers 23, womit der Schieber 25 seinen Weg nach unten beendet hat und der Durchbruch 27 vollständig verschlossen ist. Zum Heben des Schiebers 25 wird in umgekehrter Reihenfolge verfahren, also beginnend mit Erregung der Erregerspule 43 des Spulenkörpers 22, danach Erregung der Erregerspule 42 des Spulenkörpers 21, danach Spule 44, danach Spule 43 und zum Schluß Spule 42.

Sollte die elektrische Spannungsversorgung ausfallen, so besitzt der Stoßdämpfer den Vorteil, daß der Schieber mittels einer Feder 52 in die Schließstellung gedrückt wird. Diese Stellung ist die Ruhestellung des Schiebers.

Der Regel- bzw. Steuerschaltkreis 46 weist vorzugsweise einen Mikrocomputer und/oder einen Mikriprozessor auf, der sämtliche Steuersignale innerhalb des Stoßdämpfers gewinnt, wie Bes-chleunigung mittels eines Beschleunigungsgeb-ers 49, Weg des Stoßdämpfers mittels eines Weggebers (P 33 12 881.2) und entsprechend den errechneten Dämpfungswerten die Erregerspulen ansteuert zur Höhenverstellung des Schiebers 25. Dadurch kann der Schieber für die jeweilige momentane Situation optimal eingestellt werden.

Die Spannungsversorgung des Regel- bzw. Steuerschaltkreises 46 kann extern über eine Zuleitung 47 geschehen. Ebenso ist es möglich, innerhalb des Stoßdämpfers eine interne Energiequelle vorzusehen, beispielsweise einen Weicheisenkern mit Erregerspule, an dem ein Magnet vorbeiläuft. Die in der Drahtwicklung induzierte Spannung dient dann der internen Spannungsversorgung des Regel- bzw. Steuerschaltkreises. Zusätzlich können dem Regel- bzw. Steuerschaltkeis 46 extern weitere Signale, wie zum Beispiel die Drehzahl des Motors, zugeführt werden.

In bevorzugter Ausführung ist der untere Teil 53 der Kolbenstange 3, beispielsweise in Figur 1 ab der gezeigten oberen Bruchlinie, aus antimagnetischem Material, z.B. aus Messing, hergestellt. Ebenso bestehen die Abstandsscheiben 28, 29 aus antimagnetischem Material.

Der erfindungsgemäße Stoßdämpfer kann in bekannter Weise als Einrohr- oder als Zweirohr-Stoßdämpfer ausgeführt sein, wobei im letzteren Fall am kolbenseitigen Ende des inneren Zylinderrohres noch mindestens ein Ventil angeordnet ist, durch welches Dämpfungsflüssigkeit in den äußeren Zylinder strömen kann. Das Gaspolster zum Druckausgleich befindet sich hier im äußeren Zylinder, wenn ein System mit flüssigem Dämpfungsmedium Vewendung findet.

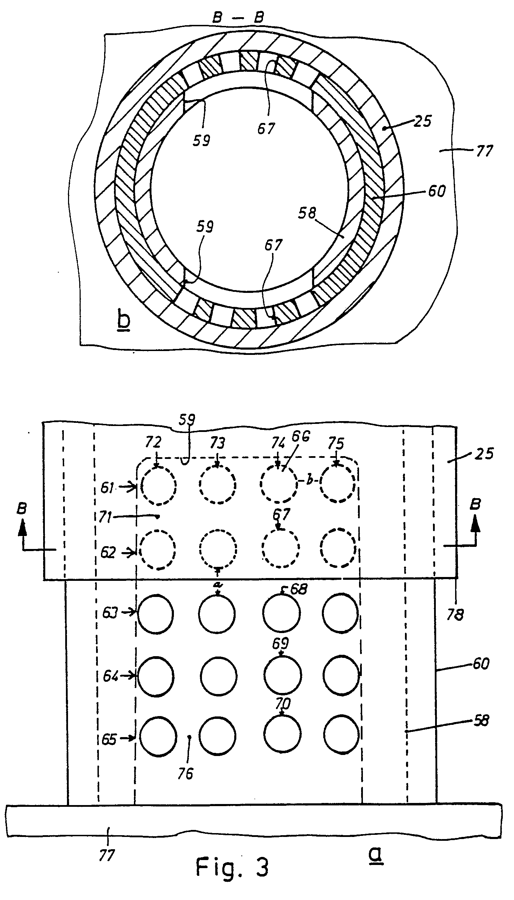

Die Figuren 3a und b zeigen das untere Ende einer Kolbenstange 58 oberhalb des Kolbens 78 in Draufsicht (a) und im Querschnitt längs der Linie B-B (b). Die Kolbenstange 58 weist in diesem Teil einen bzw. mehrere Durchbrüche 59 auf, die vorzugsweise als Langloch ausgeführt sind. Im Falle des Hubschiebers gemäß Figur 1 sind diese Langlöcher bevorzugt parallel zur Längsachse der Kolbenstange ausgerichtet.

Auf die Kolbenstange 58 ist nun eine rohrförmige Hülse 60 aufgeschoben, die fest auf der Kolbenstange aufsitzt in formschlüssiger oder kraftschlüssiger Verbindung. Diese Hülse 60 weist im Bereich des oder der Durchbrüche 59 der Kolbenstange 58 Löcher 66, 67, 68, 69, 70 auf, die vorzugsweise in Querreihen 61, 62, 63 64, 65 oder Längsreihen 73, 74, 75, 76 angeordnet sind. Zwischen den einzelnen Querreihen verbleibt je eine Materialbrücke 71 der Breite a. Auf dieser Hülse 60 läuft nun beweglich der Hubschieber 25 auf und ab. Vorzugsweise besteht deshalb die Hülse 60 aus antimagnetischem Material, beispielsweise aus Messing.

Bei der Bewegung des Hubschiebers 25 gemäß seinen einzelnen Schritten verharrt die untere Begrenzungskante 79 jeweils innerhalb der einzelnen Materialbrücke 71 zwischen den jeweiligen Querreihen 61-65 und beispielsweise noch oberhalb der Querreihe 61. Dadurch wird erreicht, daß das durch den Durchbruch 59 und die freigegebenen Löcher - in Fig. 3 die Löcher der Reihen 63, 64 und 65 - strömende Dämpfungsmedium keinerlei Kräfte oder Momente aufgrund der Strömungsgeschwindigkeit auf den Hubschieber 25 übertragen kann. Da in aller Regel die Durchbrüche 5g radialsymmetrisch auf der Kolbenstange 58 verteilt sind und somit auch die Löcher innerhalb der Wandung der Hülse 60 radialsymmetrisch verteilt sind, übt die Dämpfungsflüssigkeit, die in den abgedeckten Löchern - steht hier die Löcher der Querreihen 61 und 62 - keine Bewegungsmomente auf den Hubschieber 25 aus.

Des weiteren kann in vorteilhafter Weise durch die Wahl einer anderen ortsfesten Hülse mit verschieden großen Löchern im Bereich des oder der Durchbrüche der Kolbenstange die Dämpfungscharakteristik des erfindungsgemäßen Stoßdämpfers vorbestimmt werden, beispielsweise entsprechend der gewählten Anwendung des Stoßdämpfers für Personenkraftwagen oder Lastwagen.

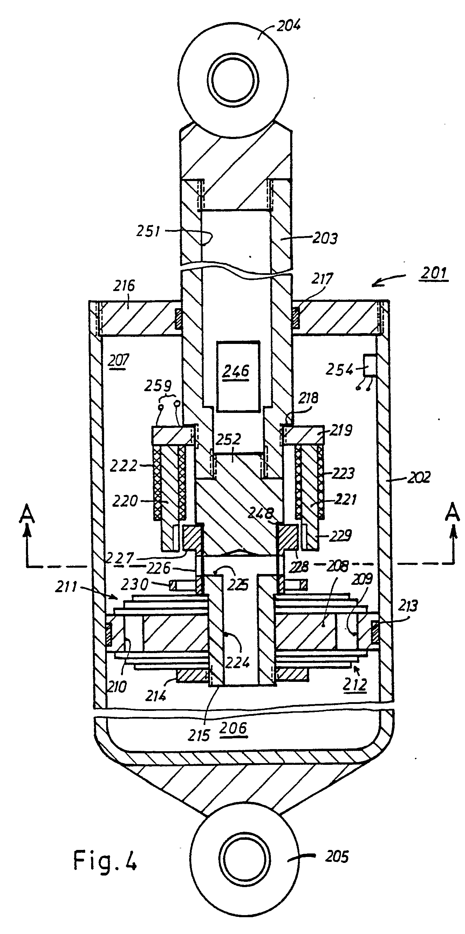

Eine derartige ortsfeste Hülse mit Löchern im Bereich des oder der Durchbrüche der Kolbenstange kann auch in vorteilhafter Weise für einen Stoßdämpfer mit Drehschieber Verwendung finden, wie dieser bezüglich der Figuren 4, 5 und 6 näher erläutert ist. In diesem Falle sind die Löcher 66, 67, 68, 69, 70 vorzugsweise in Längsreihen 73, 74, 75, 76 angeordnet, was in Fig. 3 ebenfalls gezeigt ist. Zwischen den einzelnen Löchern jeder Längsreihe verbleibt eine Materialbrücke 77 der Breite b.

Zur Wirkungsweise ist vorab zu sagen, daß in diesem Fall der Drehschieber eine mit dem Durchbruch oder den Durchbrüchen der Kolbenstange koinzidierende Öffnung bzw. Öffnungen aufweist, wobei die Steuerkante der Öffnung des Drehschiebers das ist die jeweilige Schließ- oder Öffnungskante der Öffnung des Drehschiebers - bei jedem Schritt des Drehschiebers innerhalb der Materialbrücke 77 zum Stehen kommt.

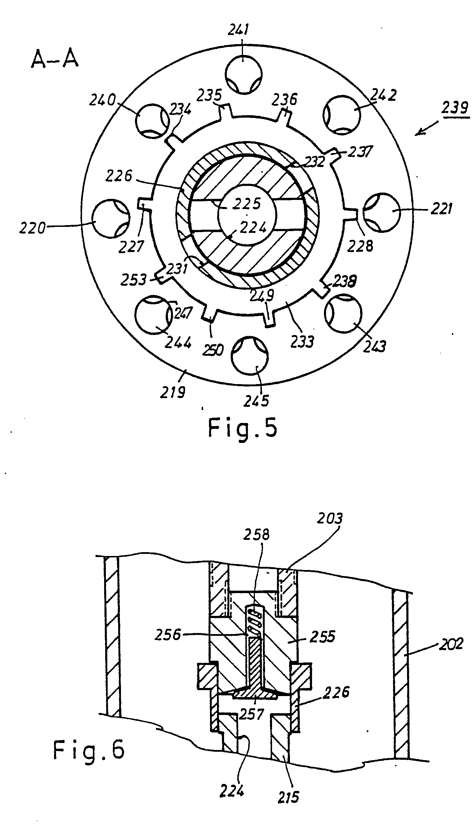

Die Figuren 4 und 5 zeigen einen erfindungsgemäßen Stoßdämpfer mit Drehschieber, bestehend aus einem Stoßdämpfer 201 mit einem Zylinder 202, der beidendig geschlossen ist. Der Aufbau des Kolben-Zylindersystems entspricht demjenigen der Figuren 1 und 2, weshalb auf diese Beschreibung verwiesen wird. Das obere Ende des Zylinders ist mittels eines Zylinderdeckels 216 verschlossen, wobei durch diesen eine Kolbenstange 203 in den Zylinder 202 ragt und der Durchgang mittels einer Ringdichtung 217 zur Kolbenstange hin abgedichtet ist. Am oberen Ende der Kolbenstange und am unteren Ende des Zylinders ist jeweils eine Halterung 204, 205 zur Befestigung des Stoßdämpfers 201 einerseits an der Karosserie und andererseits am Rad oder an der Achse des Fahrzeugs angeordnet. Die Kolbenstange ist teilweise hohl und besitzt eine Längsbohrung 251, in die am unteren Ende ein Endstück 252 eingeschraubt ist.

Der Kolben 208 kann ein gewöhnlicher Kolben sein, wie er im Stoßdämpferbau bekannt ist, weshalb der Kolben 208 Durchgangsbohrungen 209, 210 aufweist, die mittels Federpaketen 211, 212 abgedeckt sind. Der Kolben 208 teilt den Zylinderinnenraum in eine untere Kammerhälfte 206 und in eine obere Kammerhälfte 207, die somit in der in Fig. 4 gezeigten Ausführung über die Durchgangsbohrungen 209, 210 miteinander in Verbindung stehen.

Die Kolbenstange 203 kann ein Endstück 252 aufweisen, welches in dieselbe eingeschraubt ist und auf welche der Kolben 208 aufgesetzt ist. Das untere Ende 215 der Kolbenstange 203 bzw. des Endstücks 252 weist, ausgehend von der Stirnfläche des Endstücks 252, eine Längsbohrung 224 auf, die zentrisch zur Längsachse der Kolbenstange 203 verläuft und sich bis über den Kolben 208 erstreckt. Quer zu dieser Längsbohrung 224 weist das Endstück 252 bzw. die Kolbenstange 203 oberhalb des Kolbens 208 Durchbrüche auf, die radial die Längsbohrung 222 durchsetzen, wobei die Anzahl dieser Durchbrüche gerade oder ungerade sein kann, jedoch vorzugsweise radialsymmetrisch angeordnet sind. In den Figuren 4 und 5 sind zwei Durchbrüche gekennzeichnet, die hier eine Durchgangsbohrung 225 längs eines Durchmessers bilden. Damit verbinden die Bohrungen 224, 225 die Kammerhälften 206 und 207 miteinander und schaffen so bei der bevorzugten Verwendung des Kolbens 208 mit Hoch- und Niederdruckventilen einen Bypass.

Die Kolbenstange 203 weist nunim Bereich der oberen Kammerhälfte 207 Magnete oder Spulenkörper 220, 221, 240, 241, 242, 243, 244, 245 auf, die vorzugsweise stabförmig ausgebildet sind und sich parallel zur Längsachse der Kolbenstange erstrecken und dabei ringförmig um die Kolbenstange angeordnet und ortsfest mit der Kolbenstange verbunden sind. Die Spulenkörper weisen je eine Erregerspule 222, 223 auf zur Erzeugung eines Magnetflusses innerhalb des oder der jeweils angesteuerten Spulenkörper auf.

Beispielsweise können die Spulenkörper, wie in Fig. 5 gezeigt, in äquidistanten Abständen an einer Scheibe 219 angeordnet sein, die eine zentrische Bohrung aufweist, durch die die Kolbenstange 203 geführt ist. Dazu kann die Kolbenstange eine umlaufende Schulter 218 mit Gewinde im verjüngten Bereich aufweisen, wobei die Scheibe 219 auf die Kolbenstange 203, wie in Fig. 4 gezeigt, auf den verjüngten Endteil aufgeschraubt ist. Auf diese Weise sind die Spulenkörper fest mit der Kolbenstange 203 verbunden.

Oberhalb des Kolbens 208 ist auf dem unteren Ende der Kolbenstange 203 koaxial um dieselbe herum im Bereich der Querbohrung 225 ein Drehschieber 226 angeordnet, der zylindrischhülsenförmig ausgebildet ist und der ebenfalls zwei Durchgangsbohrungen 231, 232 (Fig. 5) aufweist, die mit der Querbohrung 225 bei bestimmter Stellung des Drehschiebers in Deckung gebracht werden können. Zur Halterung des Drehschiebers 226 kann die Kolbenstange bzw. das Endstück 52 inherhalb derselben einen weiteren umlaufenden Absatz 248 in der Höhe des Drehschiebers aufweisen. Das obere Ende des Drehschiebers 226 weist eine bestimmte Anzahl von Nocken 227, 228, 234, 235, 236, 237, 238, 249, 250, 253 oder Zähne auf, die den Polschuhen 247 der Spulenkörper seitlich unmittelbar gegenüberstehen. Die unteren Enden der Spulenkörper überragen bzw. überlappen somit die Nocken des Drehschiebers. Somit bilden die Spulenkörper oder Magnete mitsamt den daraufsitzenden Erregerspulen einen außenliegenden Stator 239 eines Schrittmotors, der Drehschieber 226 mit den Nocken bildet dabei den innenliegenden Rotor, wobei die Nocken ihrerseits die Polschuhe des Rotors darstellen. Beispielsweise wird in Fig. 4 der magnetische Kreis geschlossen über den Spulenkörper 220, den Nocken 227 des Drehschiebers 226, den Nocken 228 des Drehschiebers, den umgekehrt erregten Magneten 229 und die Halterungsscheibe 219, die aus magnetisierbarem Material besteht. Die Nocken des Drehschiebers, vorzugsweise die jeweils sich paarweise gegenüberliegenden Nocken, sind miteinander magnetisch kurzgeschlossen. Die Spulenkörper bestehen dabei aus bekannten magnetischen Materialien hoher Permeabilitäten. Bei bestimmten Anwendungsfällen können die Magnete auch Dauermagnete sein, deren Magnetisierung durch die Erregerspulen bei Stromfluß verstärkt wird. Die Ausgestaltung des Schrittmotors kann auch dergestalt ausgeführt sein, daß der Drehschieber als außenliegender Rotor sowohl die Kolbenstange als auch die Magnete umfaßt. In diesem Falle sind die Magnete mitsamt den Erregerspulen als innenliegender Stator ausgeführt. Des weiteren sind Ausführungen möglich, bei denen die Magnete nicht parallel zur Kolbenstange, sondern beispielsweise radial zu dieser angeordnet sind. Entscheidend ist nur, den Bewegungsmechanismus für den Drehschieber dergestalt auszubilden, daß derselbe über eine Ansteuerung definiert schrittweise gedreht werden kann, um so die Querbohrung innerhalb der Kolbenstange im gewünschten Maß abzudecken.

Fig. 5 zeigt einen Schnitt längs der Linie A-A in Fig. 4, wobei hier der Schrittantrieb aus acht Mg9neten aufgebaut ist, die in äquidistanten Abständen um die Kolbenstange herum angeordnet sind. Der Drehschieber 226 ist für vier Schritte ausgelegt. Vorzugsweise sind die jweils sich gegenüberliegenden Magnete gegensinnig magnetisch erregt, so daß über die sich paarweise gegenüberliegenden Magnete der magnetische Kreis geschlossen ist.

In Fig. 5 stehen beispielsweise beim Schritt null die sich gegenüberliegenden Nocken 234, 238 den Polschuhen der ebenfalls sich paarweise gegenüberliegenden Magnete 240, 243 gegenüber. Der nächste Nocken 235 auf der Scheibe steht einen Schritt vor dem Magneten 241. Bei Schritt eins wird beispielsweise der Magnet 241 und magnetisch gegensinnig der diesem gegenüberliegende Magnet erregt. Dadurch wandert der Nocken 235 (und der gegenüberliegende Nocken) in den unmittelbaren Bereich des Polschuhs des Magneten 241, wobei nun der nächstfolgende Nocken 236 einen Schritt vor dem nächstfolgenden Magneten 242 steht. Bei Schritt zwei wird nun der Magnet 242 (und der gegenüberliegende) erregt, so daß der Nocken 236 (und der gegenüberliegende) unmittelbar gegenüber dem Polschuh des Magneten 242 zu liegen kommt. Nunmehr steht der nächstfolgende Nocken 237 einen Schritt vor dem nächstfolgenden Magneten 221. Bei Schritt drei wird nun der Magnet 221 (und der gegenüberliegende Magnet 220) erregt, so daß der Nocken 237 direkt gegenüberliegend den Polschuh des Magneten 221 (und der gegenüberliegende Nocken 221 (und der gegenüberliegende Nocken ebenso gegenüber dem Magneten 220) bewegt wird. Auf diese Weise werden bei der Ansteuerung der Magnete durch den Steuerschaltkreis immer die Reihe der Magnete aufsteigend und absteigend durchfahren.

Natürlich ist es möglich, den Schaltmechanismus mit einer größeren oder kleineren Anzahlvon Magneten zu versehen und auch die Schrittzahl des Drehschiebers optimal den gewünschten Bedingungen anzupassen.

Des weiteren kann bei Bedarf im Innenraum des Zylinders ein Beschleunigungsgeber 254 angeordnet sein, der bevorzugt in der Kammerhälfte angeordnet ist, in der sich auch der Steuerschaltkreis 246 befindet.

Beim erfindungsgemäßen Stoßdämpfer sowohl in der Ausführung mit Hubschieber, als auch mit Drehschieber ist es nicht nötig - jedoch möglich von außerhalb desselben Steuerungsgrößen, wie die Geschwindigkeit, die Beschleunigung oder die Drehzahl, dem Steuerschaltkreis zuzuführen. Es genügt allein die Eingabe des Weges, die vorzugsweise auch innerhalb des Stoßdämpfers gewonnen werden kann. Denn entscheidend ist nur die schnelle Änderung des . Durchflußquerschnittes und somit die schnelle Änderung des Schrittmotors. Wenn dieser anspricht, bevor überhaupt die bei einem Stoßdämpfer für Kraftfahrzeuge auftretenden maximalen Schwingungen von ca 10 bis 12 Hz wirksam werden, kann man auf die Eingabe oder Verarbeitung eines Geschwindigkeits-, Beschleunigungs- oder Drehzahlsignals verzichten und allein als Regelsignal ein wegabhängiges Signal verarbeiten, welches der Relativbewegung des Kolbens gegenüber dem Zylinder - Rad gegenüber der Karosserie - proportional ist. In diesem Fall liegt ein echter selbstregelnder Stoßdämpfer vor, dem von außen nur noch die Versorgungsspannung zugeführt werden muß. Deshalb können sich bei einem Kraftfahrzeug alle vier Stoßdämpfer unabhängig voneinander selbsttätig regeln.

Ein Beschleunigungsgeber ist erst bei höheren Frequenzen beispielsweise erst ab ca 100 Hz notwendig, wenn also der erfindungsgemäße Stoßdämpfer nicht für Kraftfahrzeuge, sondern zur Schwingungsdämpfung an schnell schwingenden Maschinen oder Aggregaten eingesetzt wird.

Damit kann jeder Stoßdämpfer unabhängig voneinander die jeweils optimale Dämpfung entsprechend den Erfordernissen, beispielsweise Straßengegebenheiten, berechnen und den Drehschiebar entsprechend einstellen. Bis auf die Spannungsversorgung sind damit alle Teile im Stoßdämpfer selbst integriert.

Die Verwendung des herkömmlichen Kolbens mit Hoch- und Niederdruckventil ist deshalb vorteilhaft, weil bei einem eventuellen Ausfall der selbsttätigen Steuergun die Dämpfungsfunktion des Stoßdämpfers für dessen Grenzwerte voll erhalten bleibt.

Der Steuerschaltkreis weist vorzugsweise einen Mikrocomputer und/oder einen Mikroprozessor auf, der sämtliche Steuersignale, Geschwindigkeit, Beschleunigung, Drehzahl des Motors und Weg des Stoßdämpfers, verarbeitet und entsprechend die Magnete des Stators ansteuert, wodurch der Drehschieber für die jeweilige momentane Situation optimal eingestellt wird.

Beim Ausführungsbeispiel gemäß den Figuren 4 und 5 dient die Die Drehfeder 30 dient insbesondere dazu, bei einem eventuellen Ausfall der selbsttätigen elektrischen Steuerung den Drehschieber in seine Schließstellung zu drehen, so daß die. Verbindung der beiden Kammerhälften über die Längsbohrung 224 und die Querbohrung 225 verschlossen ist und nunmehr die Ventile innerhalb des Kolbens in Tätigkeit treten, womit der Stoßdämpfer seine volle Funktionsfähigkeit, allerdings ausgelegt für Grenzwerte, beibehält.

Figur 3 zeigt ein weiteres Ausführungsbeispiel eines selbstregelnden Stoßdämpfers gemäß Figur 4, von dem nur das Endstück der Kolbenstange im Unterschied zum Stoßdämpfer gemäß Figur 4 ausgestaltet ist.

An der Kolbenstange ist ein Endstück 255 angeordnet, vorzugsweise eingeschraubt, welches eine zentrale Sackbohrung 256 aufweist. Innerhalb dieser Sackbohrung ist ein Ventil 257 angeordnet, wobei im Endteil der Sackbohrung 256 zusätzlich eine Druckfeder 258 angeordnet sein kann, die das Ventil 257 in eine Vorzugsrichtung bewegt und zwar zum Schließen der Mündung der Längsbohrung innerhalb des unteren Endes 215 der Kolbenstange.

Das Ventil 257 ist bei positiver Dämpfungskurve, also beim Anrömen des Ventiltellers 257 von unten geöffnet. Schwingt nun der Stoßdämpfer aus, also will das Dämpfungsmedium von der Kammer 206 zur Kammer 207 über die öffnungen 231, 232 des Drehschiebers 226, die Bohrung 225 und die Längsbohrung 224 des Kolbens bei vollständig geöffnetem Drehschieber 226 zurückfließen, so wird das Ventil 257 durch das strömende Medium und/oder die Druckfeder 258 nach unten bewegt und schließt schlagartig die Mündung der Längsbohrung 224 ab. Der Drehschieber ist dabei in seine voll geöffnete Stellung gesteuert. Der Ausschwingvorgang kann nunmehr nur über die Ventile 209 und 210 innerhalb des Kolbens (Figur 4) erfolgen. Trifft nun während des Ausschwingvorgangs, also bei negativer Dämpfungskurve, bevor der Ausschwingvorgang seine Null-Linie erreicht hat, ein Ereignis ein, beispielsweise wird das Rad schlagartig hin zur Karosserie bewegt, so daß die Dämpfungskurve wieder positiv wird, so wird sofort entsprechend dem errechneten Wert der Drehschieber verstellt. Da das Ventil 257 vom Dämpfungsmedium abgehoben wird, ist der Bypass wieder durchlässig und es kann sich ein neuer Einschwingvorgang an den vorangegangenen, noch nicht abgeschlossenen Ausschwingvorgang anschließen.

Zur Bestimmung des Weges der Kolbenstange gegenüber dem Zylinder kann dieser in der Innenwandung in Längsrichtung eine Meßstrecke aufweisen und innerhalb der Kolbenstange kann zur Abtastung der Meßstrecke ein magnetischer oder kapazitiver Sensor angeordnet sein, der der Meßstrecke direkt gegenübersteht und der mit dem Regel- und Steuerschaltkreis elektrisch verbunden ist. Dabei geschieht die Gewinnung eines wegabhängigen Meßsignals am einfachsten mittels eines Gewindes innerhalb der Innenwandung eines Zylinders, wobei dem Gewinde ein ander Kolbenstange angeordneter kapazitiver oder magnetischer Sensor gegenübersteht.

Die Gewinnung eines wegabhängigen Meßsignals kann dabei in beiden Ausführungsformen des erfindungsgemäßen Stoßdämpfers, also entweder mit Hubschieber oder mit Drehschieber, angewendet werden.

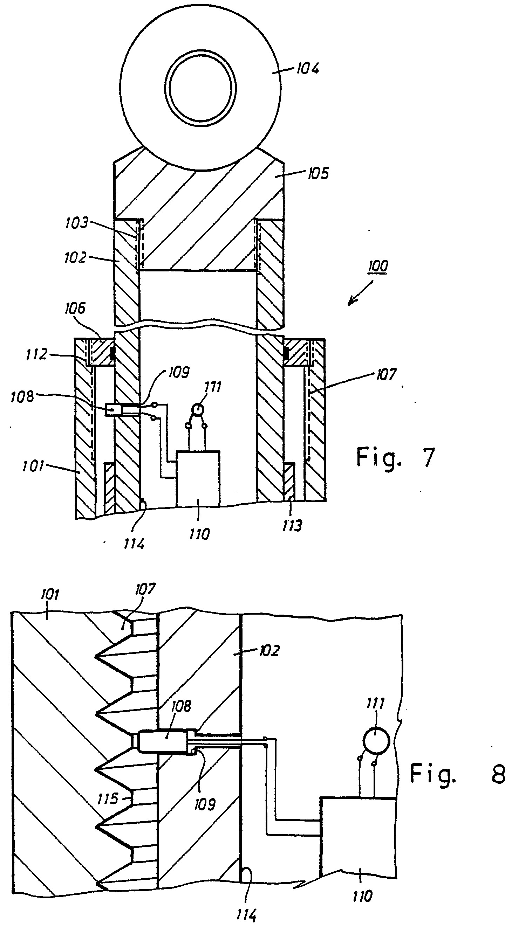

Fig. 7 zeigt einen Stoßdämpfer 100, der zu seiner erfindungsgemäßen selbsttätigen Regelung eine Meßstrecke zur Bestimmung des Weges des Zylinders relativ zur Kolbenstange aufweist. Der Stoßdämpfer 100 besteht aus einem Zylinder 101, in den eine Kolbenstange 102 eintaucht. Die Kolbenstange ist vorzugsweise als Rohr ausgeführt und besitzt an ihrem oberen Ende ein Innengewinde 103, in welches ein Verbindungsstück 105 eingeschraubt ist, welches eine Halterung 104 zur Befestigung des Stoßdämpfers beispielsweise am Rad eines Kraftfahrzeugs aufweist. Der Zylinder 101 ist an seinem oberen Ende mittels eines Zylinderdeckels 106 verschlossen, durch den die Kolbenstange 102 in den Zylinder eintaucht. Der Zylinderdeckel 106 ist vorzugsweise mittels Gewinde in ein Gewinde 112 im obersten Teil des Zylinders 101 eingeschraubt.

Innerhalb des Zylinders ist nun in Längsrichtung des Zylinders an der Innenwandung desselben eine Meßstrecke 107 angeordnet, die gemäß Figur 2 vorzugsweise ein Trapezgewinde 115 ist. Dieser Meßstrecke 107 bzw. diesem Trapezgewinde 115 steht ein Meßfühler gegenüber, der hier vorzugsweise ein magnetischer oder kapazitiver Sensor ist. Dieser Sensor ist in einer Bohrung 109 der Wandung der Kolbenstange 102 angeordnet und steht der Meßstrecke 107 bzw. dem Trapezgewinde 115 direkt gegenüber. Vorzugsweise ist der Meß-Sensor l08 ein Hall-Sensor oder Hall-Generator. Gemäß Figur 2 können zur Richtungsdiskriminierung zwei Hall-Generatoren 108, 111 oder Hall-Sensoren angeordnet sein, so daß die Auf- und Abbewegung der Kolbenstange gegenüber dem Zylinder festgestellt werden kann.

Innerhalb der Bohrung 114 der Kolbenstange 102 befindet sich ein Steuerschaltkreis 110, an dem die Hall-Sensoren 108, 111 angeschlossen sind.

Mit der Bezugsziffer 113 ist ein Durchschlagschutz bezeichnet.

Bewegt sich nun die Kolbenstange 102 relativ zum Zylinder 101, so streichen die Meßfühler 108, 111 an der Meßstrecke 107 bzw. dem Trapezgewinde 115 vorbei. Jede Erhöhung, über die die Hall-Sensoren 108, 111 hinwegstreichen, liefern einen Ausgangsimpuls, die innerhalb der Zellschaltung gezählt werden und somit ein dem Weg proportionales Signal erfolgen.

Die Ausgestaltung der Meßstrecke als Gewinde oder auch als Dauermagnete in äquidistanten Abständen an der Zylinderinnenwandung liefert somit ein Signal, bestehend aus einer Mehrzahl von digitalen Impulsen, deren Zahl gleich der Anzahl der vom Sensor 108, 111 überstrichenen Gewindegänge bzw. vorbeilaufenden Magnete ist. Die einzelnen Impulse dieses digitalen Signals werden innerhalb einer Zählschaltung des Steuerschaltkreises 110 gezählt. Gleichzeitig wird zwischen je zwei aufeinanderfolgenden Impulsen die Zeitdifferenz gemessen, und zwar fortlaufend. Aus der dergestalt ermittelten Beschleunigung kann die zu erwartende Amplitude errechnet werden, wobei dieser Wert zur Ansteuerung des Steuerschiebers verwendet wird, der nunmehr entsprechend schrittweise verstellt wird.

Liste der Bezugszeichen
- 1: Stoßdämpfer.
- 2: Zylinder.
- 3: Kolbenstange.
- 4, 5: Halterungen.
- 6: untere Kammerhälfte.
- 7: obere Kammerhälfte.
- 8: Kolben.
- 9, 10: Ventilbohrungen.
- 11, 12: Ventilfedern.
- 13: Ringdichtung.
- 14: Mutter.
- 15: unteres Ende der Kolbenstange.
- 16: Zylinderdeckel.
- 17: Ringdichtung.
- 18: Schulter.
- 19: Scheibe.
- 20: Hülse
- 21, 22, 23: torusförmige Spulenkörper.
- 24: Füllring.
- 25: Schieber.
- 26: Längsbohrung,.
- 27: Querbohrung.
- 28, 29: magnetisch isolierende Abstandsscheiben.
- 30, 31: scheibenförmige Polschuhe.
- 32-41: Ringe.
- 42, 43, 44: Erregerspulen.
- 45: Bewegungs-Doppelpfeil.
- 46: Regelschaltkreis.
- 47: Stecker für Spannungsversorgung.
- 48: Bohrung der Kolbenstange.
- 49: Beschleunigungsgeber.
- 50: magnetische Feldlinie.
- 51: umgebördelter Rand.
- 52: Druckfeder.
- 53: Unterer Teil der Kolbenstange.
- 54: Rohrförmiger Zylinder.
- 55: Boden.

56: Deckel.
57: Innere, stirnseitige Schmalfläche.
58: Kolbenstange.
59: Durchbruch oder Langloch.
60: ortsfeste Hülse.
61-65: Querreihen von Löchern.
66-70: einzelne Löcher.
71: Materialbrücke der Breite a.
72-75: Längsreihen von Löchern.
76: Materialbrücke zwischen den Längsreihen der Breite b.
77: Kolben.
78: untere Begrenzungskante des Hubschiebers 25.
100: Stoßdämpfer.
101: Zylinder.
102: Kolbenstange.
103: Innengewinde.
104: Halterung.
105: Verbindungsstück.
106: Zylinderdeckel.
107: Meßstrecke.
108: Hall-Sensor.
109: Bohrung.
110: Steuerschaltkreis.
111: Hall-Sensor.
112: Gewinde.
113: Durchschlagschutz.
114: Bohrung.
115: Trapezgewinde als Meßstrecke.
201: Stoßdämpfer.
202: Zylinder.
203: Kolbenstange.
204, 205: Halterungen.
206: untere Kammerhälfte.
207: obere Kammerhälfte.
208: Kolben.
209, 210: Ventilbohrungen.
211, 212: Ventilfedern.
213: Ringdichtung.
214: Motor.
215: unteres Ende der Kolbenstange.
216: Zylinderdeckel.
217: Ringdichtung.
218: Schulter.
219: Scheibe.
220, 221: Magnete.
222, 223: Erregerspulen.
224: Längsbohrung.
225: Querbohrung.
226: Drehschieber.
227, 228: Nocken.
229: unteres Ende der Magnete.
230: Drehfeder.
231, 232: Bohrungen innerhalb des Drehschiebpers.
233: Scheibe.
234, 235, 236, 237,
238, 249, 250, 253: Nocken.
239: Stator.
240, 241, 242, 243,
244, 245: Magnete.
247: Polschuh.
248: Absatz.
246: Steuerschaltkreis.

251: Bohrung.
252: Endstück.
254: Beschleunigungsgeber.
255: Endstück.
256: Sackbohrung.
257: Ventil.
258: Druckfeder.
259: Anschlüsse der Erregerspulen.

**Patentansprüche**

1. Einrohr- oder Zweirohr-Stoßdämpfer (1; 201) mit veränderbarer Dämpfungscharakteristik, insbesondere für Kraftfahrzeuge, der aus einem beidendig geschlossenen Zylinder (2; 202) besteht und mit mindestens einem Dämpfungsmedium gefüllt ist und eine Kolbenstange (3; 203) aufweist, die abgedichtet in den Zylinder(2; 202) eintaucht und die an ihrem zylinderseitigen Ende (53; 215) einen gegen die Zylinderwand abgedichteten Kolben (8; 208) — gegebenenfalls mit Hoch- und Niederdruckventilen (9, 10, 11, 12; 209, 210, 211, 212) trägt, der den Zylinderraum in zwei Kammerhälften (6, 7; 206, 207) aufteilt, wobei die Kolbenstange (3; 203) von ihrem stirnseitigen Ende (15; 215) ausgehend zur gegebenenfalls zusätzlichen Verbindung der beiden Kammerhälften (6, 7; 206, 207) eine Längsbohrung (26; 224) im Bereich des Kolbens (8; 208) und oberhalb desselben mindestens einen die Längsbohrung (26; 224) durchsetzenden Durchbruch (27; 225) aufweist, der durch einen elektrisch gesteuerten Steuerschieber (25; 226) verschließbar ist, der mittels an der Kolbenstange (3; 203) angeordneter elektrischer Spulen (42, 43, 44; 222, 223) beweglich ist, gekennzeichnet durch folgende Merkmale:

a) der Steuerschieber ist ein Schieberin Gestalt einer Hülse (25, 226), die koaxial die Kolbenstange (3, 58, 203) im Bereich des Durchbruchs (27, 59, 225) derselben umfaßt und auf der Kolbenstange beweglich ist und die bei Bewegung relativ zur Kolbenstange den Durchbruch derselben mehr oder wenigerfreizugeben im Stande ist

b) der Schieber (25, 226) ist als der bewegliche Teil eines Schrittmotors ausgebildet, wobei der Stator desselben aus einer Mehrzahl von Erregerspulen (42, 43, 44; 222, 223) mit Spulenkörpern (Magnelen) (21, 22, 23; 220, 221, 240, 241, 242, 243) besteht, die den Schieber und die Kolbenstange ortsfest mit derselben umgeben

c) innerhalb des Zylinders (2, 202), vorzugsweise innerhalb der Kolbenstange (3, 203), ist ein elektronischer Regel- oder Steuerschaltkreis (46, 246) angeordnet, der elektrische Schaltimpulse an den Schrittmotor in Abhängigkeit der dem Regelschaltkreis eingegebenen Daten, wie Temperatur oder Viskosität des oder der Dämpfungsmedien, Weg der Kolbenstange gegenüber dem Zylinder des stoßdämpfers, Geschwindigkeit und Beschleunigung des Fahrzeugs, liefert zur schrittweisen Verstellung des Schiebers (25, 226),

d) gegebenenfalls ist innerhalb des Stoßdämpfers ein elektrische Ausgangssignale erzeugender Weggeber (107, 108) angeordnet, dessen Ausgangssignale dem Regel- oder Steuerschaltkreis (46, 246) zur Verarbeitung eingegeben werden.

2. Stoßdämpfer nach Anspruch 1, dadurch gekennzeichnet, daß der hülsenförmige Schieber eine sich auf der Kolbenstange (3, 58) auf und ab bewegende Hülse (25) ist, die an der Mantelwandung in Querschnittsebenen liegende, übereinander angeordnete Ringe (32, 41) oder Sektoren aus magnetischem Werkstoff aufweist, die untereinander magnetisch in Verbindung stehen, wobei die Spulenkörper (21, 22, 23) in Richtung der Kolbenstange übereinander angeordnet und an dieser befestigt sind und die Spulenkörper Polschuhe (30, 31) aufweisen, die den Ringen des Schiebers mit geringem Abstand gegenüber stehen.

3. Stoßdämpfer nach Anspruch 1, dadurch gekennzeichnet, daß der Schieber (25) aus magnetisch weichem Werkstoff besteht und die Spulenkörper (21, 22, 23) torusförmige Eisenkerne sind, die die Kolbenstange (3) und den Schieber ringförmig umgeben und die in einer Hülse (20) gehalten sind, die zentrisch fest mit der Kolbenstange verbunden ist, wobei der untere Teil (53) der Kolbenstange im Bereich des Durchbruchs (27) und des Schiebers (25) gegebenenfalls aus antimagnetischem Material besteht und gegebenenfalls zwischen den einzelnen Spulenkörpern (21, 22, 23) Abstandsscheiben (28, 29) angeordnet sind, die auch aus antimagnetischem Material bestehen.

4. Stoßdämpfer nach einem der vorherigen Ansprüche, dadurch gekennzeichnet, daß zur Bewegung des Schiebers (25) in fünf Schritten dieser zehn Ringe (32, 41) in äquidistanten Abständen trägt und daß drei Spulenkörper (21, 22, 23) mit je zwei Polschuhen (30, 31) vorhanden sind, wobei die Polschuhe voneinander einen Abstand haben, der gleich dem doppelten Abstand zweier benachbarter Ringe ist.

5. Stoßdämpfer nach Anspruch 1, dadurch gekennzeichnet, daß der hülsenförmige Schieber ein Drehschieber (226) ist, der koaxial die Kolbenstange (203) im Bereich des Durchbruchs (225) umfaßt und der in seiner Wandung entsprechend der Anzahl der Durchbrüche radiale Offnungen (231, 232) aufweist, die bei Drehung des Drehschiebers relativ zur Kolbenstange den bzw. die Durchbrüche mehr oder minder freigeben, wobei die Spulenkörper (Magneten) (220, 221, 240, 241, 242, 243) des Stators (251) des Schrittmotors stabförmig ausgebildet sind und die Kolbenstange koaxial umgeben und an ihren oberen Enden an der Kolbenstange gehalten und kmreisförmig um dieselbe und parallel zu dieser angeordnet sind, wobei die Erregerspulen (222, 223) einzeln oder je paarweise gegenüberliegend ansteuerbar sind.

6. Stoßdämpfer nach Anspruch 5, dadurch gekennzeichnet, daß der Drehschieber (226) eine Hülse ist, die längs ihres Umfanges magnetisierbare Nocken (227, 228, 234, 235, 236, 237, 238) trägt, wobei die Spulenkörper den als Innenläufer ausgebildeten Drehschieber bis zum Bereich der Nocken überragen und als polschuhe (229) ausgebildet sind.

7. Stoßdämpfer nach Anspruch 6, dadurch gekennzeichnet, daß der Drehschieber (226) eine Anzahl von Nocken (227, 228, 234, 235, 236, 237, 238, 247, 248, 249) trägt, die der einfachen Anzahl oder einem Vielfachen davon, vorzugsweise der doppelten Anzahl, der auszuführenden Schritte des Drehschiebers entspricht.

8. Stoßdämpfer nach einem der vorherigen Ansprüche, dadurch gekennzeichnet, daß die Kolbenstange (203) innen im Bereich der Durchbrüche (225) ein vorzugsweise federbelastetes Ventil (257) zum Verschließen der Durchbrüche in einer Vorzugsrichtung aufweist.

9. Stoßdämpfer nach einem der Ansprüche 2 oder 5, dadurch gekennzeichnet, daß auf der Kolbenstange im Bereich des bzw. der Durchbrüche (27, 29, 225) eine den bzw. mdie Durchbrüche abdeckende Hülse (60) angeordnet ist, die auf die Kolbenstange ortsfest aufgeschoben ist und die im Bereich des bzw. der Durchbrüche in Querreihen (61-65) und/oder Längsreihen (73-76) angeordneten Löcher (66-70) aufweist, wobei der Steuerschieber (25, 226) beweglich auf dieser Hülse (60) angeordnet ist.

10. Stoßdämpfer nach Anspruch 1, dadurch gekennzeichnet, daß der Weggeber zur Bestimmung des Weges der Kolbenstange (102) gegenüber dem Zylinder (101) derselben in der Innenwandung in Längsrichtung eine Meßstrecke (107) aufweist und innerhalb der Kolbenstange zur Abtastung der Meßstrecke ein magnetischer oder kapazitiver Sensor (108, 11 1) angeordnet ist, der der Meßstrecke direkt gegenübersteht und der mit dem Steuerschaltkreis (46, 110, 146) elektrisch verbunden ist.

11. Stoßdämpfer nach Anspruch 10, dadurch gekennzeichnet, daß die Meßstrecke abwechselnd aus Erhöhungen und Vertiefungen besteht und vorzugsweise ein Gewinde (107) oder Nuten sind und daß der Sensor ein Hallgenerator oder ein Hall-sensor (108, 111) ist.

12. Stoßdämpfer nach Anspruch 11, dadurch gekennzeichnet, daß zwei um 90 Grad versetzte Hallsensoren (108, 111) an der Kolbenstange (102) angeordnet sind.

13. Stoßdämpfer nach Anspruch 1, dadurch gekennzeichnet, daß zur Messung des Weges des Zylinders gegenüber der Kolbenstange dieselbe abschnittsweise magnetisiert ist und der Zylinder koaxial um die Kolbenstange herum mindestens eine Spule trägt und die dergestalt erzeugten elektrischen Signale dem Regel- und Steuerschaltkreis zur Verarbeitung zugeführt werden.

**Revendications**

1. Amortisseur à tube unique ou à deux tubes (1; 201) avec caractéristiques d'amortissement variables, en particulier pour véhicules, lequel consiste en un cylindre (2; 202) fermé aux deux extrémités et est rempli d'au moins un fluide d'amortissement et présente une tige de piston (3; 203) s'immergeant de façon étanchée dans le cylindre (2; 202) et portant à son extrémité côté cylindre (53; 215) un piston (8; 208) rendu étanche par rapport à la paroi du cylindre — le cas échéant avec des soupapes haute pression ou basse pression (9, 10, 11, 12; 209, 210, 211, 212) — lequel partage l'intérieur du cylindre en deux moitiés (6, 7; 206, 207), ladite tige de piston (3; 203) présentant une forure longitudinale (26; 224) dans la zone du piston (8; 208) qui s'étend de son extrémité frontale (15; 215) jusqu'au raccord éventuellement additionnel des deux moitiés de chambre (6, 7; 206, 207) et, au-dessus dudit piston, au moins un perçage (27; 225) à travers la forure longitudinale (26; 224) pouvant être fermé à l'aide d'une coulisse de réglage (25; 226) à commande électrique pouvant être mue au moyen de bobines électriques (42, 43, 44; 222, 223) disposées sur la tige de piston (3; 203), caractérisé en ce que

a) la coulisse de réglage présente la forme d'une douille (25, 226) qui entoure coaxialement la tige de piston (3, 58, 203) dans la zone du perçage (27, 59, 225) de celle-ci et peut être mue sur la tige de piston et qui lors de son mouvement relativement à la tige de piston peut plus ou moins mettre à découvert le perçage de celle-ci

b) la coulisse (25, 226) est conformée comme la partie mobile d'un moteur pas-à-pas, le stator de celui-ci consistant en plusieurs bobines excitatrices (42, 43, 44; 222, 223) avec des corps (aimants) (21, 22, 23; 220, 221, 240, 241, 242, 243) entourant la coulisse et la tige de piston de façon fixe par rapport à cette-dernière

c) un circuit électronique de réglage ou de commande (46, 246) est disposé à l'intérieur du cylindre (2, 202), de préférence à l'intérieur de la tige de piston (3, 203) qui transmet au moteur pas-à-pas des impulsions de commande pour le déplacement graduel de la coulisse (25, 226), et ceci en fonction des données introduites dans le circuit de réglage, telles que la température ou la viscosité du ou des fluides amortisseurs, le déplacement de la tige de piston par rapport au cylindre de l'amortisseur, la vitesse et l'accélération du véhicule,

d) le cas échéant, un capteur de déplacement (107, 108) générant des signaux de sortie électriques est disposé à l'intérieur de l'amortisseur, dont les signaux de sortie sont transmis au circuit de réglage ou de commande (46, 246) aux fins de leur traitement.

2. Amortisseur selon la revendication 1, caractérisé en ce que la coulisse sous forme de douille est une douille (25) se déplaçant vers le haut et vers le bas sur la tige de piston (3, 58) et présentant sur sa paroi, dans des plans de coupe transversaux, des anneaux (32, 41) ou des secteurs en matériau magnétique disposés l'un au-dessus de l'autre et communiquant entre eux par voie magnétique, les corps des bobines (21, 22, 23) en direction de la tige de piston étant disposés l'un au-dessus de l'autre et fixés à celle-ci, et les corps des bobines présentant des pièces polaires (30, 31) disposées en face des anneaux de la coulisse, à faible distance.

3. Amortisseur selon la revendication 1, caractérisé en ce que la coulisse (25) consiste en un matériau magnétiquement mou et que les corps' des bobines (21, 22, 23) sont des noyaux de fer toriques entourant la tige de piston (3) et la coulisse en forme de cercle et fixés dans une douille (20) qui est fermement reliée au centre avec la tige de piston, que la partie inférieure (53) de la tige de piston consiste le cas échéant en matériau antimagnétique dans la zone du perçage (27) et de la coulisse (25) et que, le cas échéant, des rondelles de distance (28, 29), consistant elles-aussi en matériau antimagnétique, sont disposées entre les corps de bobines individuels (21, 22, 23).

4. Amortisseur selon l'une quelconque des revendications précédentes, caractérisé en ce que la coulisse (25), afin d'assurer son mouvement en cinq pas, porte dix anneaux (32, 41) à intervalles équidistants et qu'il y a trois corps de bobines (21, 22, 23) chacun avec deux pièces polaires (30, 31), la distance entre les pièces polaires correspondant au double de la distance entre deux anneaux voisins.

5. Amortisseur selon la revendication 1, caractérisé en ce que la coulisse en forme de douille est une coulisse rotative (226) qui entoure coaxialement la tige de piston (203) dans la zone du perçage (225) et dont la Paroi présente des ouvertures radiales (231, 232) correspondant au nombre des perçages lesquelles ouvertures, lorsque la coulisse rotative est tournée relativement à la tige de piston, mettent plus ou moins à découvert le ou les perçages, que les noyaux des bobines (aimants) (220, 221, 240, 241, 242, 243) du stator (251) du moteur pas-à-pas ont la forme de baguettes et entourent coaxialement la tige de piston et qu'ils sont fixés à leurs extrémités supérieures à la tige de piston et disposés de façon circulaire autour d'elle et parallèlement à celle-ci, les bobines excitatrices (222, 223) pouvant être activées individuellement ou en paires opposées.

6. Amortisseur selon la revendication 5, caractérisé en ce que la coulisse rotative (226) est une douille qui le long de son pourtour porte des saillies magnétisables (227, 228, 234, 235, 236, 237, 238), les noyaux des bobines dépassant la coulisse rotative conformée comme rotor intérieur jusqu'à la zone des saillies et servant de pièces polaires (229).

7. Amortisseur selon la revendication 6, caractérisé en ce que la coulisse rotative (226) porte un nombre de saillies (227, 228, 234, 235, 236, 237, 238, 247, 248, 249) qui correspond au nombre simple ou à un multiple de ce nombre, de préférence au nombre double, des pas à effectuer par la coulisse rotative.

8. Amortisseur selon l'une quelconque des revendications précédentes, caractérisé en ce que la tige de piston (203) présente à l'intérieur, dans la zone des perçages (225), une soupape (257) de préférence commandée par ressort pour fermer les perçages dans une direction préférentielle.

9. Amortisseur selon l'une des revendications 2 ou 5, caractérisé en ce qu'une douille (60) couvrant le ou les perçages est disposée sur la tige de piston dans la zone du, resp. des perçages (27, 29, 225), ladite douille étant enfilée stationnairement sur la tige de piston et présentant dans la zone du, resp. des perçages des trous (66-70) disposés en rangées transversales (61-65) et/ou rangées longitudinales (73-76), la coulisse de réglage (25, 226) étant disposée de façon mobile sur cette douille (60).

10. Amortisseur selon la revendication 1, caractérisé en ce que le capteur de déplacement mesurant le déplacement de la tige de piston (102) par rapport au cylindre (101) de celle-ci présente un parcours de mesure (107) dans la paroi intérieure en direction longitudinale et qu'une sonde magnétique ou capacitive (108, 111) est disposée à l'intérieur de la tige de piston, directement en face du parcours de mesure servant à analyser ce-dernier et qui est relié électriquement au circuit de commande (46, 110, 146).

11. Amortisseur selon la revendicaton 10, caractérisé en ce que le parcours de mesure consiste en saillies et cavités alternantes, de préférence en un filetage (107) ou des saillies et que la sonde est un générateur Hall ou une sonde de Hall (108, 111).

12. Amortisseur selon la revendication 11, caractérisé en ce que deux sondes de Hall (108, 111) décalées de 90 degrés sont disposéee sur la tige de piston (102). .

13. Amortisseur selon la revendication 1, caractérisé en ce que la tige de piston, afin de mesurer le déplacement du cylindre par rapport à celle-ci, est magnétisée par sections, que le cylindre porte au moins une bobine coaxialement autour de la tige de piston et que les signaux électriques ainsi générés sont transmis pour traitement au circuit de réglage et de commande.

## Claims

1. Single-tube or double-tube shock absorber (1, 201) with changeable absorbing characteristics, especially for vehicles, which consists of a cylinder (2, 202) closed at both ends and which is filled with at least one absorbing medium and which has a piston rod (3, 203) that plunges into the cylinder (2, 202) in a sealed manner and that has a piston (8, 208) — optionally with highpressure and low-pressure valves (9, 10, 11, 12, 209, 210, 211, 212) — at its end (53, 215) facing the cylinder, and this piston divides the cylinder space into two chamber halves (6, 7, 206, 207), whereby the piston rod (3, 203), as seen from its lower end (15, 215) towards the — optionally additional — connection of the two chamber halves (6, 7, 206, 207), has a longitudinal borehole (26, 224) in the vicinity of the piston (8, 208) and has at least one passage (27, 225) which penetrates the longitudinal borehole (26, 224) above the piston, and this passage can be closed by an electrically regulated control slide (25, 226) that is movable by means of electric coils (42, 43, 44, 222, 223) positioned on the piston rod (3, 203), characterized by the following features:

a) the control slide is a slide in the form of a tube (25, 226), which coaxially surrounds the piston rod (3, 58, 203) in the vicinity of the passage (27, 59, 225) in the piston rod and which is movable upon the piston rod and which, in the case of motion relative to the piston rod, is able to unblock the passage thereof to a greater or lesser extent,

b) the slide (25, 226) is designed as the movable part of a stepping motor, whereby the stator thereof consists of a number of excitation coils (42, 43, 44, 222, 223) with coil formers (magnets) (21, 22, 23, 220, 221, 240, 241, 242, 243), which surround the slide and the piston rod in a stationary manner,

c) inside the cylinder (2, 202), preferably inside the piston rod (3, 203), there is an electronic regulating and control circuit (46, 246) that emits electrical switching pulses to the stepping motor in order to regulate the slide (25, 226) in increments, depending on the data entered into the control circuit such as temperature or viscosity of the absorbing medium/media, path of the piston rod relative to the cylinder of the shock absorber, speed and acceleration of the vehicle,

d) optionally, there is a path pick-up (107, 108) inside the shock absorber which generates electric output signals and whose output signals are transmitted to the regulating and control circuit (46, 246) for further processing.

2. Shock absorber according to Claim 1, characterized in that the cylindrical slide is a tube (25) which moves up and down on the piston rod (3, 58) and which has rings (32, 41) or sectors made of magnetic material, which are magnetically connected to each other and which are positioned one above the other on the mantel wall in cross-section planes, whereby the coil formers (21, 22, 23) are arranged one above the other in the direction of the piston rod and they are attached to it, and the coil formers have pole shoes (30, 31), which are positioned opposite from the rings of the slide at a close distance.

3. Shock absorber according to Claim 1, characterized in that the slide (25) is made of magnetically soft material and the coil formers (21, 22, 23) are torus-shaped iron cores which are positioned in a circle around the piston rod (3) and the slide, and which are held in a tube (20) which is centrically connected to the piston rod in a firm manner, whereby the lower part (53) of the piston rod is optionally made of antimagnetic material in the vicinity of the passage (27) and of the slide (25), and optionally, there are spacer disks (28, 29) positioned between the individual coil formers (21, 22, 23) and also made of antimagnetic material.

4. Shock absorber according to one of the preceding claims, characterized in that the slide (25) has ten rings (32, 41) at equidistant intervals in order to move the slide (25) in five steps, and in that there are three coil formers (21, 22, 23), each having two pole shoes (30, 31), whereby the pole shoes are at a distance from each other that is equal to twice the distance of two adjacent rings.

5. Shock absorber according to Claim 1, characterized in that the tube-like slide is a rotary-type slide (226), which coaxially surrounds the piston rod (203) in the vicinity of the passage (225) and which has radial passages (231, 232) in its wall corresponding to the number of passages, and these radial passages unblock the passage(s) to a greater or lesser extent when the rotary-type slide rotates relative to the piston rod, whereby the coil formers (magnets) (220, 221, 240, 241, 242, 243) of the stator (251) of the stepping motor are rod-shaped and surround the piston rod coaxially and are attached at their upper ends to the piston rod, and they are positioned in a circle and parallel to the piston rod, whereby the excitation coils (222, 223) can be actuated individually or in pairs opposite each other.

6. Shock absorber according to Claim 5, characterized in that the rotary-type slide (226) is a tube which has magnetizable cams (227, 228, 234, 235, 236, 237, 238) along its circumference, whereby the coil formers extend beyond the rotary-type slide designed as an internal slide to the area of the cams and these coil formers are designed as pole shoes (229).

7. Shock absorber according to Claim 6, characterized in that the rotary-type slide (226) has a number of cams (227, 228, 234, 235, 236, 237, 238, 247, 248, 249) which corresponds to the number of steps to be carried out or to a multiple thereof, preferably twice the number of steps.

8. Shock absorber according to one of the preceding Claims, characterized in that the piston rod (203) has a preferably spring-loaded valve (257) on the inside in the vicinity of the passages (225) to close the passages in a preferred direction.

9. Shock absorber according to one of the Claims 2 or 5, characterized in that, on the piston rod in the vicinity of the passage(s) (27, 29, 225), there is a tube (60) covering the passage(s), which is slipped onto the piston rod in a stationary manner and which has holes (66 to 70) arranged in crosswise rows (61 to 65) and/or longitudinal rows (73 to 76) in the vicinity of the passages, whereby the control slide (25, 226) is moveably positioned on this tube (60).

10. Shock absorber according to Claim 1, characterized in that the path pick-up for determining the path of the piston rod (102) with respect to its cylinder (101) has a measuring segment (107) in the inner wall in the longitudinal direction and, inside the piston rod, there is a magnetic or capacitive sensor (108, 111) inside the piston rod for sensing the measuring segment, and this sensor is directly opposite from the measuring segment and it is electrically connected to the control circuit (46, 110, 146).

11. Shock absorber according to Claim 10, characterized in that the measuring segment consists alternately of elevations and recesses and preferably is a thread (107) or channels and in that the sensor is a Hall generator or a Hall sensor (108, 111).

12. Shock absorber according to Claim 11, characterized in that two Hall sensors (108, 111), offset at a 90-degree angle, are positioned on the piston rod (102).

13. Shock absorber according to Claim 1, characterized in that, in order to measure the path of the cylinder relative to the piston rod, the piston rod is magnetized in sections and the cylinder has at least one coil coaxially surrounding the piston rod, and the electrical signals generated in this manner are fed to the regulating and control circuit in order to be processed.

Fig. 1

Fig. 2

Fig. 3

Fig. 4

4

A—A

Fig.5

Fig.6

5

Fig. 7

Fig. 8